# EUROPEAN PATENT SPECIFICATION

(11) **EP 2 903 782 B1**
(45) Date of publication and mention of the grant of the patent: **14.02.2018**
(21) Application number: 13843129.1
(22) Date of filing: 02.10.2013
(51) Int. Cl.: B24D 15/04

(54) **HAND-HELD CONFORMABLE SANDING BLOCK**
ANPASSBARE TRAGBARE SCHLEIFKISSEN
BLOC DE PONÇAGE AJUSTABLE ET PORTABLE

(30) Priority: 02.10.2012 US 201261709048 P
(43) Date of publication of application: 12.08.2015
(73) Proprietor: Trade Associates, Inc., Kent, WA 98032 (US)
(72) Inventor: Lin, Bang Fang, Huatan Township Chunhua County Taiwan (TW)
(74) Representative: Schmitt-Nilson Schraud Waibel Wohlfrom Patentanwälte Partnerschaft mbB
(86) International application number: PCT/US2013/063098
(87) International publication number: WO 2014/055669

(56) References cited:
- US-A- 4 202 139
- US-A- 4 981 734
- US-A1- 2005 266 226
- US-B1- 6 503 612
- US-B1- 6 503 612
- US-B2- 7 169 029
- US-B2- 8 057 286

## Description

### TECHNICAL FIELD

implementations provide sanding block compositions and methods of manufacturing sanding blocks. More particularly, the sanding blocks include one or both of ethylene-vinyl acetate copolymer and low-density polyethylene along with a blowing agent, among other components, resulting in conformable sanding blocks.

### BACKGROUND OF THE INVENTION

Sanding blocks used to hold sandpaper are available in many varieties and are typically used for smoothing and polishing rough or irregular surfaces. Traditionally, sanding blocks are wood or cork blocks with one smooth, flat side adapted to receive sandpaper around its exterior. Other sanding blocks are made of rubber or other resilient material and use holding clamps, sharp teeth or clips to secure sandpaper along the exterior. Although these traditional sanding blocks are widely used on flat surfaces, their use on curved surfaces is problematic. In particular, traditional sanding blocks have relatively large flat sandpaper support surfaces, which do not conform to the shape of curved surfaces. Use of such sanding blocks on curved surfaces often results in uneven sanding, mainly because these blocks are not pliable to the curvature of the surface being sanded, and because excessive pressure is often applied to some portions of the surface being sanded. The application of excessive pressure may result in over-sanding and rapid deterioration of the sandpaper, which may also damage the underlying surface being smoothed or polished.

Sanding blocks are frequently used in the automobile repair industry for sanding both flat and curved surfaces. For instance, sanding of automobile bodies prior to repainting involves both flat and curved surfaces of the automobiles. Given this constantly evolving industry, automobiles have numerous designs, each unique and different from the other. Some automobile body parts are relatively smooth with slight curvatures, and thus are difficult to sand evenly. Conventional sanding blocks result in a rippling effect along such sanded surfaces. Conversely, other body parts in an automobile are flat, but nevertheless require sanding without damaging the adjoining curved areas. This necessitates a need in the art for sanding blocks that are readily conformable to flat as well as curved surfaces. The sanding blocks disclosed herein fill this need and provide further related advantages.
From US-B-6503612 there is known an elastomeric sanding block conformable to curved or flat surfaces, wherein the elastomeric sanding block has a Shore A hardness ranging from about 30 to about 90, and wherein the elastomeric sanding block is made from a plurality of components comprising: an admixture of ethylene-vinyl acetate copolymer, wherein the admixture is in an amount that ranges from about 50 to about 100 percent of the composition by weight; and a blowing agent in an amount that ranges from about 0 to about 5 percent of the composition by weight.

### SUMMARY OF THE INVENTION

The present disclosure provides compositions and methods of manufacturing sanding blocks that are readily conformable to curved as well as flat surfaces. Implementations may be useful in applications in which the sanding block provides rigidity to support sandpaper on flat surfaces, yet has the pliability to support sandpaper on curved surfaces. Although the terms "sanding block" and "sanding" are used throughout the specification, it will be understood that the sanding block may also be used in applications such as polishing and buffing.

According to certain implementations, an elastomeric sanding block has a Shore A hardness ranging from about 30 to about 90, and is composed of a plurality of components comprising ethylene-vinyl acetate copolymer (commonly known as "EVA"), low-density polyethylene (commonly known as LDPE") or an admixture of ethylene-vinyl acetate copolymer copolymer and low-density polyethylene. The polymer or admixture further includes a blowing agent. In some implementations, the composition further includes one or more fillers (e.g., calcium carbonate), metallocene catalyzed ethylene-α-olefin copolymers, processing additives (e.g., zinc stearate, zinc oxide, titanium oxide, and an organic oxide), plasticizers, and extenders.

Implementations are also directed to a method for manufacturing an elastomeric sanding block conformable to curved or flat surfaces and includes the steps of either providing ethylene-vinyl acetate copolymer or low-density polyethylene or forming an admixture of ethylene-vinyl acetate copolymer and low-density polyethylene, wherein the admixture is in an amount that ranges from about 35 to about 70 percent composition by weight, followed by combining the admixture with a blowing agent, such as azodicarbonamide, to yield a feedstock, and thermoforming the feedstock in a mold to yield a foamed material sheet. The resulting foamed material sheet is cut in desired shapes and sizes to yield elastomeric sanding blocks.

### DETAILED DESCRIPTION

The present disclosure is directed to compositions and methods for producing sanding blocks. The sanding blocks may be readily conformable to a variety of surface features encountered during sanding, buffing and polishing applications. The sanding blocks may contain one or both of ethylene-vinyl acetate copolymer and low-density polyethylene combined in a variety of relative amounts. In some aspects, the sanding blocks also include other components such as blowing agents, metallocene catalyzed ethylene-α-olefin copolymers, α-olefin copolymers (e.g., TAFMER produced by Mitsui Chemicals), processing additives, pigments and appropriate fillers. In one aspect, the sanding blocks are manufactured by combining ethylene-vinyl acetate copolymer and low-density polyethylene, and combining the resulting admixture with a blowing agent under heat to yield a feedstock, followed by thermoforming the feedstock in a mold and cutting the resulting material sheet to yield the sanding blocks.

Although various implementations are set forth below, it will be clear to one skilled in the art that the present disclosure may include additional embodiments, or that the disclosure may be practiced without several of the details described herein. In some instances, procedural steps have not been described in detail in order to avoid unnecessarily obscuring the described aspects of the disclosure.

A brief review of polymer nomenclature is provided to aid in the understanding of the present invention. In general, a polymer is a macromolecule (i.e., a long chain molecular chain) synthetically derived from the polymerization of monomer units, or which naturally exists as a macromolecule (but are still derived from the polymerization of monomer units). The individual units comprising the molecular chain are the monomer units. For example, polyethylene is a polymer derived from the monomer ethylene (CH2=CH2). More specifically, polyethylene is a "homopolymer" -that is, a polymer consisting of a single repeating unit, namely, the monomer ethylene (CH2=CH2).

In contrast, a "copolymer" is a polymer containing two (or more) different monomer units. A copolymer may generally be synthesized in several ways. For example, a copolymer may be prepared by the copolymerization of two (or more) different monomers. Such a process yields a copolymer where the two (or more) different monomers are randomly distributed throughout the polymer chain. These copolymers are known as "random copolymers." Alternatively, copolymer may be prepared by covalent coupling or joining of two homopolymers For example, the covalent coupling of one homopolymer to the terminus of a second, different homopolymer provides a "block copolymer." A block copolymer containing homopolymer A and homopolymer B may be schematically represented by the following formula: (A)x(B)y where (A)x is a homopolymer consisting of x monomers of A, (B)y is homopolymer consisting of y monomers of B, and wherein the two homopolymers are joined by a suitable covalent bond or linking spacer group. While the above formula illustrates a block copolymer having two block components (i.e., a "di-block copolymer"), block copolymers may also have three or more block components (e.g. a "tri-block copolymer" schematically represented by the formula (A)x(B)y(A)x or simply A-B-A, as well as a "multiblock copolymer" schematically represented by the formula (A-B)ₙ).

The elastomeric sanding blocks provided herein include a Shore A hardness (ASTM D2240) ranging from about 30 to about 90 and may contain a polymeric composition formulated from a variety of components as follows.

Ethylene-vinyl acetate copolymers: Ethylene-vinyl acetate copolymers are derived from random copolymerization of acetate and ethylene. In general, the ethylene-acetate copolymer has a vinyl acetate component ranging from 9 percent to 40 percent by weight, density generally ranging from 0.92 to 0.96 gm/cm³, melt index (ASTM D-1238) generally ranging from 0.3 to 43, and melting point generally ranging from 145 to 212 °F. The ethylene-vinyl acetate copolymer may be selected from any of readily available commercial grades (e.g., Elvax, Dupont Industrial Polymers, United States). In some implementations, the ethylene-vinyl acetate copolymer may be used to produce relatively soft elastomeric sanding blocks such as when certain softness of the product is being demanded. Further, in some implementations, the ethylene-vinyl acetate copolymer may be present in the sanding block in an amount that ranges from about 35 to about 70 percent of the composition by weight.

Low-density polyethylene: Low-density polyethylene is made from the monomer ethylene. It has a high degree of short and long chain branching, which results in a structure where the chains do not pack into a crystal structure too tightly, giving low-density polyethylene increased ductility. Its density ranges from 0.91 to 0.925 gm/cm³, while its melting point is about 221 to 248° F and melt index (ASTM D-1238) is about 1.25 g/10 min. The small amount of branching gives low-density polyethylene high resilience making it substantially unbreakable, yet flexible. Low-density polyethylene may be manufactured by free radical polymerization, and may be selected from any of readily available commercial grades (e.g., DOW LDPE, Dow Chemicals, United States; ExxonMobil LOPE, Exxon Mobil Chemicals). The addition of low-density polyethylene in elastomeric sanding blocks may result in relatively rigid and hard elastomeric sanding blocks, which may provide a sanding block with relatively high rigidity and hardness. In some implementations, the low-density polyethylene may be present in the sanding block in an amount that ranges from about 35 to about 70 percent of the composition by weight.

Admixture of ethylene-vinyl acetate copolymer and low-density polyethylene: In some implementations, the sanding blocks may be composed primarily of an admixture of the ethylene-vinyl acetate copolymer and the low-density polyethylene. As is known in the art, ethylene-vinyl acetate copolymers are generally available as random copolymers, whereas low-density polyethylene copolymers are available as homopolymers. In some implementations, the admixture of ethylene-vinyl acetate copolymer and a low-density polyethylene ranges from about 35 to about 70 percent of the composition by weight, and within the admixture, the amount of low-density polyethylene may range from about 10 to about 30 percent of the admixture and the amount of ethylene-vinyl acetate copolymer may range from about 70 to about 90 percent of the admixture.

In some implementations, the addition of low-density polyethylene to the ethylene-vinyl acetate copolymer results in a wide range of product hardness applicable to various sanding purposes.

In order to facilitate processing of the ethylene-vinyl acetate copolymer the low-density polyethylene or admixtures thereof may comprise various additives such as blowing agents, various oils, plasticizers, fillers, pigments, and extenders, as well as other specially additives.

Blowing agents: In certain implementations, blowing agents containing at least one amine group may be added to the sanding block composition. A blowing agent is a chemical added to an admixture of material that undergo hardening or phase transition such as polymers, to impart a cellular structure to the admixture, resulting in a polymeric foam. Mixing a blowing agent in an admixture supplies heat to the process and causes a thermal decomposition of the blowing agent. The blowing agent decomposes at elevated temperatures during processing of the polymer or admixture to generate gas, which forms a foam structure within the polymer matrix. Formation of a cellular structure also increases the relative stiffness of the original admixture. Addition of a blowing agent during processing of the polymer or admixture provides several benefits. It improves processing and ease of handling by reducing cycling time for the process as well the weight of the admixture. Further, a cushion effect is created due to release of gas during the decomposition of the blowing agent, thus improving the comfort of use of resulting product It also improves quality of the resulting product by eliminating surface imperfections and may yield a textured design, if desired.

Specialty blowing agents may further improve processing of the polymer or admixture by faster expansion rates and faster reduction in density of the resulting product. Further, some of these specialty blowing agents decompose much more efficiently than traditional agents resulting in high speed processing of admixtures.

Azodicarbonamide (AC, Hangzhou Haihong Fine Chemicals, China) is a type of blowing agent, widely used in the polymer and plastic industry. It is an exothermic blowing agent which decomposes around 200 °C and produces nitrogen, carbon monoxide, carbon dioxide and ammonia, which is trapped in the polymer or admixture as bubbles resulting in a foamed final product. Azodicarbonamide may be modified to decompose at lower temperatures to increase its compatibility with other components. Some of the other commonly used blowing agents include toluene sulfonyl hydrazide and P.P'-Oxybis (benzene sulfonyl hydrazide). The amount of blowing agent used may range from about 1.5 percent to about 4.5 percent of the composition by weight prior to decomposing.

In some implementations, a blowing agent may be combined with the ethylene-vinyl acetate copolymer to form the sanding block having Shore A hardness ranging from about 30 to about 90. In further implementations, the aforementioned sanding block may include other components that do not materially affect the hardness such as fillers, processing additives and pigments.

Metallocene catalyzed ethylene-α-olefin copolymer: In some implementations, the polymer admixture may include a metallocene catalyzed ethylene-α-olefin copolymer, while other implementations may be free of this copolymer. The addition of metallocene catalyzed ethylene-α-olefin copolymer to ethylene-vinyl acetate copolymer, low-density polyethylene, or an admixture thereof, aids in enhancing the pliability and the elasticity of the resulting product.

The metallocene catalyzed ethylene-α-olefin copolymer may be one or more of an ethylene-butene copolymer, an ethylene-hexene copolymer, and an ethylene-octene copolymer. The alpha-olefin component of the ethylene-α-olefin copolymer generally ranges from about 2 percent to about 30 percent by weight of the copolymer The metallocene catalyzed ethylene-α-olefin copolymers have densities generally ranging from 0.86 to 0.95 gm/cm³, melt indexes (ASTM D-1238) ranging from about 0.2 to 30, and melting points ranging from 122 to 248 °F. Additionally, the ethylene-octene copolymer used in various embodiments may be present in amounts up to about 5 percent of the composition by weight.

Processing additives: Processing additives may include any additive that aids in the processing, workability, or otherwise enhances the performance characteristics, of the materials and/or compositions to be formed into elastomeric sanding blocks. For example, one or more materials may be processed with the admixture to improve the admixture's processability and/or performance characteristics. Some of the commonly used processing additives include zinc stearate, stearic acid, zinc oxide, titanium oxide, organic peroxides etc. Zinc stearate, also known as Coinex-ZNST (PT. CMS Chemicals, Indonesia), acts as a lubricant and aids in reducing temperature during the processing of the admixture. In some embodiments, dicumyl peroxide (an organic peroxide) is used as a processing additive in amounts that range from about 0.35 percent to about 0.6 percent by weight of the composition.

Any number of various processing additives may be added to enhance one or more physical characteristics and properties of the elastomeric sanding blocks disclosed herein. Exemplary of such processing additives are those identified in Gachter R., Muiller H., The Plastic Additives Handbook, 4th ed., Hander Publishers, Munich, Germany (1996) (incorporated herein by reference in its entirety).

Fillers: In various embodiments, a filler such as calcium carbonate may also be added to the polymer or admixture. Generally, the amount of filler ranges from about 25 percent to about 60 percent of the composition by weight in various embodiments.

Extending oils: Further, in some other embodiments, the ethylene-vinyl acetate and low-density polyethylene admixture may also be processed together with an extending oil that comprises carbonaceous material to reduce cost of the process, or improve physical properties of the resulting product.

Pigments: Pigments such as carbon may be used in the sanding block composition and may range from about 5 percent to about 18 percent of the composition by weight.

Methods of producing sanding blocks: The various sanding block components, as identified above, may be processed together as an admixture in the following manner. First, dry components may be added to a first mixer (e.g., 350 lb. Capacity Henschel Mixer with cooler) and mixed. For example, the desired amount of one or both of the ethylene-vinyl acetate copolymer and low-density polyethylene is mixed with desired amounts of various processing additives and other specialty additives. The mixed dry blend may be allowed to reach a temperature of about 80 °F and may be fed to a second continuous mixer (e.g., via a Colortronic MH 60 dozing feeder to a 4 inch Farrel Continuous Mixer). The blades of the second continuous mixer may then be rotated (e.g., at 175 rpm) so as to cause the mixed dry blend to flux into a homogenous melt at elevated temperatures (e.g., 340°F.) and a selected amount of a cross-linking agent (e.g., an organic peroxide) and a blowing agent (e.g., azodicarbonamide) may be added to the admixture and further mixed into a molten composition.

The molten composition may then be transferred and further processed through a calendering machine so as to yield a uniform sheet of a desired thickness. As is appreciated by those skilled in the art, calendering involves extruding a mass of material between successive pairs of co-rotating, parallel rolls, which process yields a film or sheet. After calendering, the uniform sheet is thermoformed in a thermoforming machine to yield a foamed material sheet. Both calendering and thermoforming are widely used processes in the thermoplastics industry.

Following calendering and thermoforming, the foamed material sheet is cut into numerous strips of varying sizes, which may be used as hand-held sanding brocks conformable to curved or flat surfaces.

Although the present disclosure provides references to preferred embodiments, persons skilled in the art will recognize that changes may be made in form and detail without departing from the scope of the invention, as defined by the claims.

## Claims

1. An elastomeric sanding block conformable to curved or flat surfaces, wherein the elastomeric sanding block has a Shore A hardness ranging from about 30 to about 90, and wherein the elastomeric sanding block is made from a plurality of components comprising:
an admixture of ethylene-vinyl acetate copolymer and a low-density polyethylene homopolymer, wherein the admixture is in an amount that ranges from about 35 to about 70 percent of the composition by weight; and
a blowing agent in an amount that ranges from about 1.5 to about 4.5 percent of the composition by weight.

2. The elastomeric sanding block of claim 1 wherein the blowing agent contains at least one amine group.

3. The elastomeric sanding block of claim 1 wherein the blowing agent comprises one or more of azodicarbonamide, toluene sulfonyl hydrazide or benzene sulfonyl hydrazide.

4. The elastomeric sanding block of claim 1 wherein the plurality of components further comprises a metallocene catalyzed ethylene-α-olefin copolymer.

5. The elastomeric sanding block of claim 4 wherein the metallocene catalyzed ethylene-α-olefin copolymer comprises one or more of an ethylene-butene copolymer, an ethylene-hexene copolymer, or an ethylene-octene copolymer.

6. The elastomeric sanding block of claim 4 wherein the metallocene catalyzed ethylene-α-olefin copolymer comprises an ethylene-octene copolymer.

7. The elastomeric sanding block of claim 6 wherein the ethylene-octene copolymer is in an amount up to about 5 percent of the composition by weight.

8. The elastomeric sanding block of claim 1 wherein the plurality of components further comprises one or more of a filler, a processing additive or a pigment.

9. The elastomeric sanding block of claim 8 wherein the filler is in an amount that ranges from about 25 to about 60 percent of the composition by weight.

10. The elastomeric sanding block of claim 9 wherein the filler comprises calcium carbonate.

11. The elastomeric sanding block of claim 8 wherein the processing additive comprises one or more of zinc stearate, stearic acid, zinc oxide, titanium oxide, or an organic peroxide.

12. The elastomeric sanding block of claim 11 wherein the processing additive comprises the organic peroxide, and wherein the organic peroxide comprises dicumyl peroxide.

13. The elastomeric sanding block of claim 12 wherein the dicumyl peroxide is in an amount that ranges from about 0.35 to about 0.6 percent of the composition by weight.

14. The elastomeric sanding block of claim 8 wherein the pigment is in an amount that ranges from about 5 to about 18 percent of the composition by weight.

15. A method for manufacturing an elastomeric sanding block conformable to curved or flat surfaces, wherein the elastomeric sanding block has a Shore A hardness ranging from about 30 to about 90, comprising the steps of:
forming an admixture comprising an ethylene-vinyl acetate copolymer and a low-density polyethylene homopolymer, wherein the admixture is in an amount that ranges from about 35 to about 70 percent of the composition by weight;
combining the admixture with a blowing agent in an amount that ranges from about 1.5 to about 4.5 percent of the composition by weight under heat to yield a feedstock;
thermoforming the feedstock in a mold to yield a foamed material sheet; and cutting the foamed material sheet to yield the elastomeric sanding block.

## Patentansprüche

1. Elastomeres Schleifkissen, das an gekrümmte oder flache Oberflächen anpassbar ausgebildet ist, wobei das elastomere Schleifkissen eine Shore A Härte im Bereich von circa 30 bis circa 90 hat und wobei das elastomere Schleifkissen aus einer Mehrzahl von Komponenten gebildet ist, die aufweisen:
eine Beimischung aus Ethylen-Vinylacetat-Copolymer und einem Polyethylen-Homopolymer mit geringer Dichte, wobei die Beimischung in einer Menge im Bereich von circa 35 bis circa 70 Gewichtsprozent der Zusammensetzung vorliegt; und
ein Treibmittel in einer Menge im Bereich von circa 1,5 bis circa 4,5 Gewichtsprozent der Zusammensetzung.

2. Elastomeres Schleifkissen nach Anspruch 1, wobei das Treibmittel mindestens eine Amin-Gruppe umfasst.

3. Elastomeres Schleifkissen nach Anspruch 1, wobei das Treibmittel eines oder mehrere von Azodicarbonamid, Toluolsulfonylhydrazid oder Benzolsulfonylhydrazid aufweist.

4. Elastomeres Schleifkissen nach Anspruch 1, wobei die Mehrzahl von Komponenten ferner ein metallozenkatalysiertes Ethylen-α-Olefin-Copolymer aufweist.

5. Elastomeres Schleifkissen nach Anspruch 4, wobei das metallozenkatalysierte Ethylen-α-Olefin-Copolymer eines oder mehrere eines Ethylen-Buten-Copolymers, eines Ethylen-Hexen-Copolymers oder eines Ethylen-Octen-Copolymers aufweist.

6. Elastomeres Schleifkissen nach Anspruch 4, wobei das metallozenkatalysierte Ethylen-α-Olefin-Copolymer ein Ethylen-Octen-Copolymer aufweist.

7. Elastomeres Schleifkissen nach Anspruch 6, wobei das Ethylen-Octen-Copolymer in einer Menge von bis zu circa 5 Gewichtsprozent der Zusammensetzung vorliegt.

8. Elastomeres Schleifkissen nach Anspruch 1, wobei die Mehrzahl von Komponenten ferner eines oder mehrere eines Füllstoffs, eines Verarbeitungszusatzstoffes oder eines Pigments aufweist.

9. Elastomeres Schleifkissen nach Anspruch 8, wobei der Füllstoff in einer Menge im Bereich von circa 25 bis circa 60 Gewichtsprozent der Zusammensetzung vorliegt.

10. Elastomeres Schleifkissen nach Anspruch 9, wobei der Füllstoff Kalziumkarbonat aufweist.

11. Elastomeres Schleifkissen nach Anspruch 8, wobei der Verarbeitungszusatzstoff eines oder mehrere von Zinkstearat, Stearinsäure, Zinkoxid, Titanoxid oder einem organischen Peroxid aufweist.

12. Elastomeres Schleifkissen nach Anspruch 11, wobei der Verarbeitungszusatzstoff das organische Peroxid aufweist und wobei das organische Peroxid Dicumylperoxid aufweist.

13. Elastomeres Schleifkissen nach Anspruch 12, wobei das Dicumylperoxid in einer Menge im Bereich von circa 0,35 bis circa 0,6 Gewichtsprozent der Zusammensetzung vorliegt.

14. Elastomeres Schleifkissen nach Anspruch 8, wobei das Pigment in einer Menge im Bereich von circa 5 bis circa 18 Gewichtsprozent der Zusammensetzung vorliegt.

15. Verfahren zur Herstellung eines elastomeren Schleifkissens, das an gekrümmte oder flache Oberflächen anpassbar ausgebildet ist, wobei das elastomere Schleifkissen eine Shore A Härte im Bereich von circa 30 bis circa 90 hat, wobei das Verfahren folgende Schritte aufweist:
Bilden einer Beimischung, die ein Ethylen-Vinylacetat-Copolymer und ein Polyethylen-Homopolymer mit geringer Dichte aufweist, wobei die Beimischung in einer Menge im Bereich von circa 35 bis circa 70 Gewichtsprozent der Zusammensetzung vorliegt;
Kombinieren der Beimischung mit einem Treibmittel in einer Menge im Bereich von circa 1,5 bis circa 4,5 Gewichtsprozent der Zusammensetzung unter Wärmeeinfluss, um einen Rohstoff zu bilden;
Thermoformen des Rohstoffes in einer Gussform, um eine Folie aus geschäumtem Material zu bilden; und
Zuschneiden der Folie aus geschäumtem Material, um das elastomere Schleifkissen zu bilden.

## Revendications

1. Cale élastomère à poncer épousant la forme de surfaces courbes ou plates, dans laquelle la cale élastomère à poncer possède une dureté Shore A qui se situe dans la plage d'environ 30 à environ 90 et dans laquelle la cale élastomère à poncer est réalisée à partir de plusieurs composants comprenant :
un mélange d'un copolymère d'éthylène-acétate de vinyle et d'un homopolymère de polyéthylène basse densité, dans lequel le mélange est présent en une quantité qui se situe dans la plage d'environ 35 à environ 70 % de la composition en poids ; et
un agent gonflant en une quantité qui se situe dans la plage d'environ 1,5 à environ 4,5 % de la composition en poids.

2. Cale élastomère à poncer selon la revendication 1, dans laquelle l'agent gonflant contient au moins un groupe d'amine.

3. Cale élastomère à poncer selon la revendication 1, dans laquelle l'agent gonflant un ou plusieurs éléments choisis parmi l'azodicarboxamide, l'hydrazide de toluènesulfonyle ou l'hydrazide de benzènesulfonyle.

4. Cale élastomère à poncer selon la revendication 1, dans laquelle lesdits plusieurs composants comprennent en outre un copolymère d'éthylène-α-oléfine catalysé par un métallocène.

5. Cale élastomère à poncer selon la revendication 4, dans laquelle le copolymère d'éthylène-α-oléfine catalysé par un métallocène comprend un ou plusieurs copolymères choisis parmi un copolymère d'éthylène-butène, un copolymère d'éthylène-hexène ou un copolymère d'éthylène-octène.

6. Cale élastomère à poncer selon la revendication 4, dans laquelle le copolymère d'éthylène-α-oléfine catalysé par un métallocène comprend un copolymère d'éthylène-octène.

7. Cale élastomère à poncer selon la revendication 6, dans laquelle le copolymère d'éthylène-octène est présent en une quantité s'élevant jusqu'à environ 5 % de la composition en poids.

8. Cale élastomère à poncer selon la revendication 1, dans laquelle lesdits plusieurs composants comprennent en outre un ou plusieurs éléments choisis parmi une matière de charge, un additif de traitement ou un pigment.

9. Cale élastomère à poncer selon la revendication 8, dans laquelle la matière de charge est présente en une quantité qui se situe dans la plage d'environ 25 à environ 60 % de la composition en poids.

10. Cale élastomère à poncer selon la revendication 9, dans laquelle la matière de charge comprend du carbonate de calcium.

11. Cale élastomère à poncer selon la revendication 8, dans laquelle l'additif de traitement comprend un ou plusieurs éléments choisis parmi le stéarate de zinc, l'acide stéarique, l'oxyde de zinc, l'oxyde de titane ou un peroxyde organique.

12. Cale élastomère à poncer selon la revendication 11, dans laquelle l'additif de traitement comprend le peroxyde organique, et dans lequel le peroxyde organique comprend du peroxyde de dicumyle.

13. Cale élastomère à poncer selon la revendication 12, dans laquelle le peroxyde de dicumyle est présent en une quantité qui se situe dans la plage d'environ 0,35 à environ 0,6 % de la composition en poids.

14. Cale élastomère à poncer selon la revendication 8, dans laquelle le pigment est présent en une quantité qui se situe dans la plage d'environ 5 à environ 18 % de la composition en poids.

15. Procédé pour la fabrication d'une cale élastomère à poncer épousant la forme de surfaces courbes ou plates, dans lequel la cale élastomère à poncer possède une dureté Shore A qui se situe dans la plage d'environ 30 à environ 90, comprenant les étapes consistant à :
former un mélange comprenant un copolymère d'éthylène-acétate de vinyle et d'un homopolymère de polyéthylène basse densité, dans lequel le mélange est présent en une quantité qui se situe dans la plage d'environ 35 à environ 70 % de la composition en poids ;
combiner le mélange avec un agent gonflant en une quantité qui se situe dans la plage d'environ 1,5 à environ 4,5 % de la composition en poids, dans des conditions de chauffage pour obtenir une matière de base ;
soumettre la matière de base à un thermoformage dans un moule afin d'obtenir une feuille constituée d'une matière en mousse ; et
découper la feuille constituée d'une matière en mousse afin d'obtenir la cale élastomère à poncer.
